# EUROPEAN PATENT APPLICATION

(11) **EP 1 679 893 A2**
(43) Date of publication of application: **12.07.2006**
(21) Application number: 06250015.2
(22) Date of filing: 04.01.2006
(51) Int. Cl.: H04N 7/15

(54) **Video multi-conference unit (MCU)**

(30) Priority: 05.01.2005 GB 0500039
(71) Applicant: Codian Limited, Langley, Slough SL3 6EZ (GB)
(72) Inventor: MacDonald, William, San Jose California 95125 (US)
(74) Representative: Mackenzie, Andrew Bryan

(57) **Abstract**

A multi-conference unit (MCU) (2) is arranged to compress a video stream in the horizontal direction to adjust the aspect ratio prior to onward transmission to an endpoint (6-1 to 6-4). By arranging for an endpoint to de-compress the video stream by a similar amount, widescreen video streams may be transmitted and viewed using generally legacy equipment. The use of a widescreen transmission provides additional opportunities for effective layouts of windows in a composed video stream with excessive distortion or clipping.

## Description

This invention relates to a multi-conference unit for connection in a video conference network.

A live multi-way video communication is typically known as a video conference. Each conference location is equipped with a device comprising a display, camera, loudspeaker, microphone and accompanying processing and control units. This combination of equipment is typically known as a "video endpoint". The video endpoints are connected to a communications network such as ISDN, Internet Protocol (IP) or Third Generation Wireless (3G) networks. The video endpoints encode the video from the camera and the audio from the microphone, and transmit this data on the network. The endpoints also receive encoded data from the network, decode it, and output the audio and video accordingly. The video endpoints typically implement standards such as H.320, H.323 or SIP. These standards define how the video and sound (media) streams and control signals are encoded and decoded.

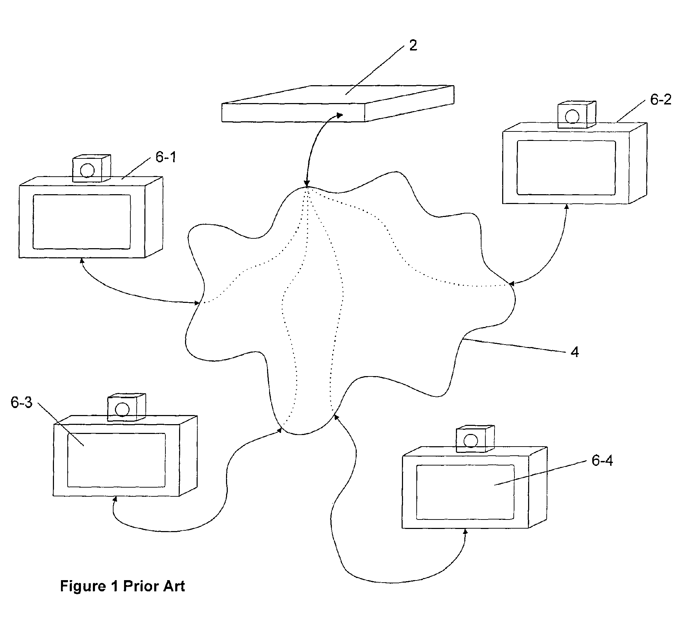

When there are more than two parties participating in a particular video communication, then it becomes known as a video conference. A typical topology is shown in Figure 1. In this topology, a video conference network 4 couples together endpoints 6-1 to 6-4. In this case, an additional piece of equipment is required, typically known as a video Multi-Conference Unit, or MCU 2. This is also connected to the communications network 4. Each individual video endpoint 6-1 to 6-4 establishes a link to the MCU 2 instead of having to establish links to every other endpoint 6-1 to 6-4.

An MCU is a device that provides a bridge between two or more terminals, or gateways, in order to enable them to participate in a multipoint conference. It is adapted to receive data streams from each endpoint participating in a videoconference, combine the data received from the endpoints and transmit a single data stream to each of the participating endpoints. The data streams sent to the endpoints may encode a composed or voice-switched image of the other participants in the conference call. If desired the data stream sent to each of the participating endpoints may also be customised for each endpoint according to the layout specified by an endpoint's user. Optionally, the MCU may also be connected to a recording unit which enables a video conference to be recorded and played back.

The purpose of the MCU 2 is to allow the endpoints to communicate with each other but without each endpoint requiring multiple communications links, and without requiring multiple displays, loudspeakers etc. To achieve this, the MCU 2 sends a "composition" of the video from the other endpoints to each endpoint. Depending on the number of parties in a conference, many different image compositions are possible:
- the screen divided into many equal sized windows
- one or two larger windows plus additional smaller windows

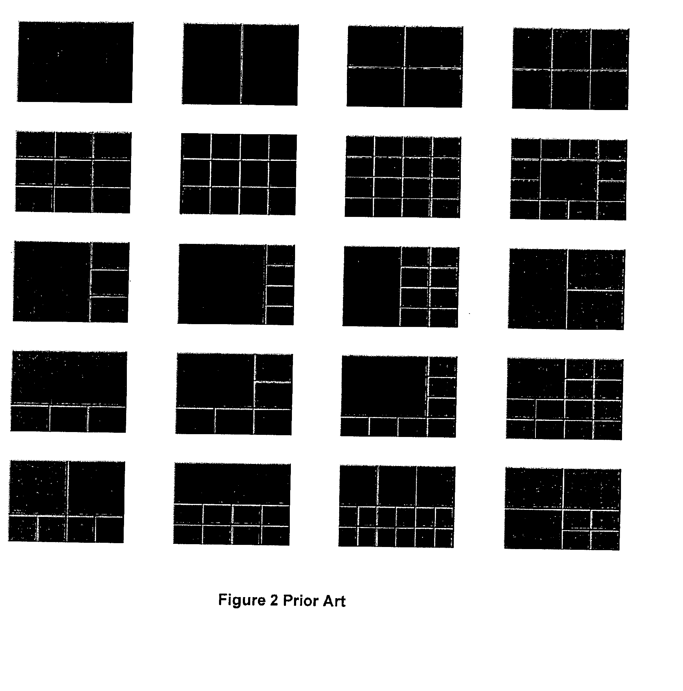

With an advanced MCU 2, each participant can make their own choice of composition. A composition can be voice switched, such that the participant(s) currently speaking are displayed in the largest windows. Figure 2 shows a selection of possible video compositions.

Current videoconferencing endpoints invariably produce images which have a width-to-height ratio of 4:3. This is commonly known as standard aspect ratio. This aspect ratio is used whatever data rate, resolution, pixel aspect ratio or frame rate is used.

However, the large flat screen displays used with modern video endpoints frequently have a width-to-height ratio of 16:9. This is commonly known as widescreen aspect ratio, or widescreen format.

Because of this difference in aspect ratios, the standard aspect ratio video cannot make best use of the widescreen display.
- The video can be displayed as if the screen were standard format, but with vertical black bars at each side of the image, or
- The display can expand the image so that it fills the full width of the screen, but with the top and bottom of the image lost (clipped), or
- The display can stretch the image in the horizontal dimension only, which results in a distorted image.

It is apparent that none of these options is ideal.

In accordance with a first aspect of the invention there is provided a multi-conference unit for connection in a video conference network, comprising a video input for receiving a video stream to be conferenced and a video output for outputting a video stream to a video endpoint, the unit further comprising a scaler operable to adjust the horizontal dimension of an output video stream before onward transmission to an endpoint, thereby to alter the aspect ratio of images in the output video stream.

In this way, use of the MCU of the invention in conjunction with aspect ratio adjustment at an endpoint allows widescreen images to be displayed correctly but without alteration to the rest of the video conference network. This provides perfect backwards compatibility and allows best use to be made of modern endpoints with widescreen displays.

In another aspect, the invention provides a method of transmitting a video stream in a video conference network comprising receiving a video stream, scaling the stream in the horizontal dimension and transmitting the scaled stream to an endpoint Embodiments of the invention will now be described by way of example and with reference to the drawings in which:-
Figure 1 is a schematic representation of a typical videoconference arrangement;
Figure 2 is a schematic representation of different options for laying out videoconference windows on a standard aspect ratio display;
Figure 3 is a screenshot of a user interface in accordance with the invention;
Figure 4a is a schematic representation of a 3 x 2 window layout;
Figure 4b is a schematic representation of a 1 + 3 window layout;
Figure 5a is a schematic representation of a 1 + 4 window layout;
Figure 5b is a schematic representation of a 4 x 3 window layout;
Figures 6a and 6b show a schematic representation of two possible 2 x 2 window layouts;
Figure 7a is a schematic representation of a composite window with window clipping carried out before composition;
Figure 7b is a schematic representation of a composite window with window clipping carried out after composition; and
Figure 8 is a schematic diagram of an MCU with a single endpoint in accordance with the invention.

As noted above, one of the functions of an MCU is to compose outgoing video streams from the multiple incoming video streams from conference participants. These outgoing streams are then displayed by the participating endpoints.

The MCU 2 is arranged to compress the outgoing video streams in the horizontal dimension. At the endpoint 6-1 to 6-4, the stream is stretched by a corresponding amount in the horizontal direction thus restoring the aspect ratio ready for display of the stream. In the discussion below, the endpoint is described as carrying out the stretching operation. In practice, however, the stretching may be carried out by the endpoint (which typically does not have a screen but rather a connector for coupling to screen) and/or by a screen connected to the endpoint. The invention is intended to encompass or interoperate with all these possibilities.

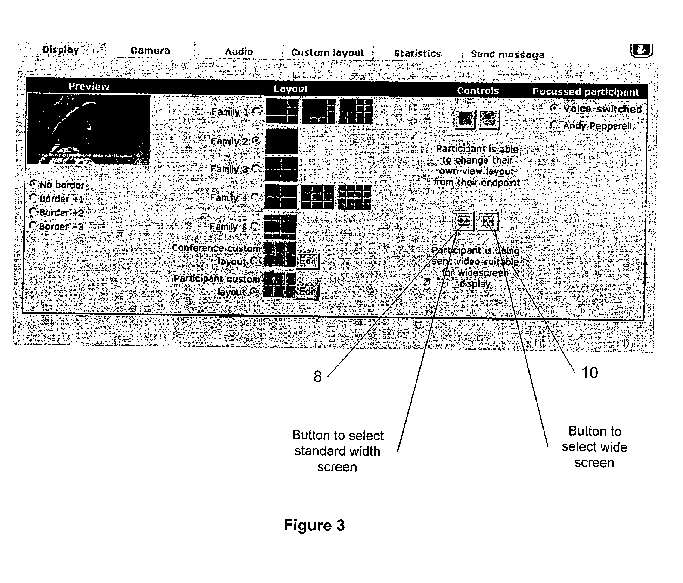

A user interface of the type shown in Figure 3 may be used to allow configuration of the widescreen or standard aspect ratio transmissions. A button 8 may select transmission for viewing in a normal aspect ratio (i.e. standard transmission with no dimensional adjustment) and a button 10 may select transmission as a widescreen signal (i.e. horizontal compression is enabled).

As explained in more detail below, the choice of widescreen transmission also affects how streams are arranged and sized before onward transmission of the outgoing composite video stream.

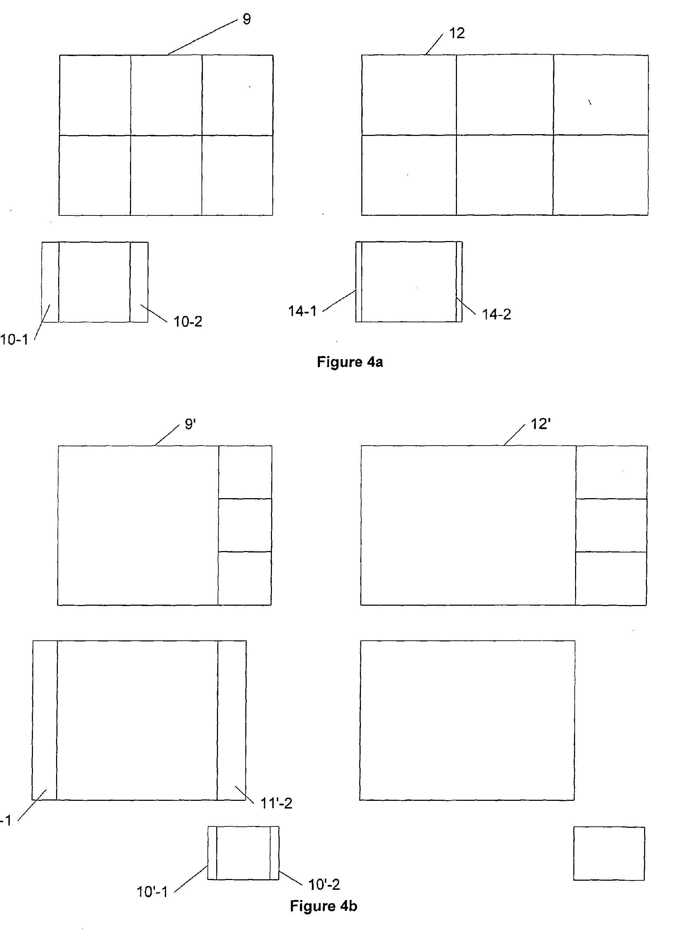

It can be seen from Figures 4, 5 and 6 that many of the possible video compositions are much more effectively presented by making use of the extra width available on a widescreen display. There is presently no standardised or established videoconferencing format for widescreen video. So the videoconferencing endpoints cannot themselves make use of this extra display width even though many of the displays used are now widescreen displays.

The endpoint need have no knowledge of the scaled nature of the video being received from the communications network. Accordingly, if the video scaled as previously described is displayed on a standard display, it would appear distorted. However, if the video is displayed on a widescreen display, then this display device can be configured to take the video input and scale it up (expand it) in the horizontal dimension such that the entire screen is filled. By this means, the compression applied by the MCU is reversed, and the video is properly displayed with no distortion.
- The full area of the wide screen is used; therefore the users see a larger image.
- For many of the screen layouts (compositions), the clipping of the images is much reduced.
- There is no loss of image resolution either vertically or horizontally
- The user benefits from these improvements without needing to upgrade the video endpoint (other than to use a widescreen display)

The behaviour of the video endpoint is unchanged even though it is providing a widescreen image. It is the MCU which composes the data stream suitable for widescreen display. An aspect of the invention is a control on the MCU to enable or disable the video scaling feature. This control button is shown in fig. 3. Clearly the feature should be disabled if the video endpoint has only a standard display, so that the image is not scaled by the MCU in this case.

Figure 4a shows a 3 x 2 layout of windows. On a standard display 9 as shown on the left of the figure, vertical strips 10-1 and 1-2 on each window have to be clipped. On a widescreen display 12, it can be seen that the clipping (14-1, 14-2) is negligible.

Figure 4b shows a 1 + 3 layout. On a standard display 9', the images in all the windows are clipped; the small windows requiring clipping 10'-1 and 10'-2 and the large window also requiring clipping 11'-1 and 11'-2. On a widescreen display 12', no clipping is necessary.

Figure 5a shows a 1 + 4 layout. On a standard display 9", the main window is clipped at 10"-1 and 10"-2. On a widescreen display 12", the clipping is negligible.

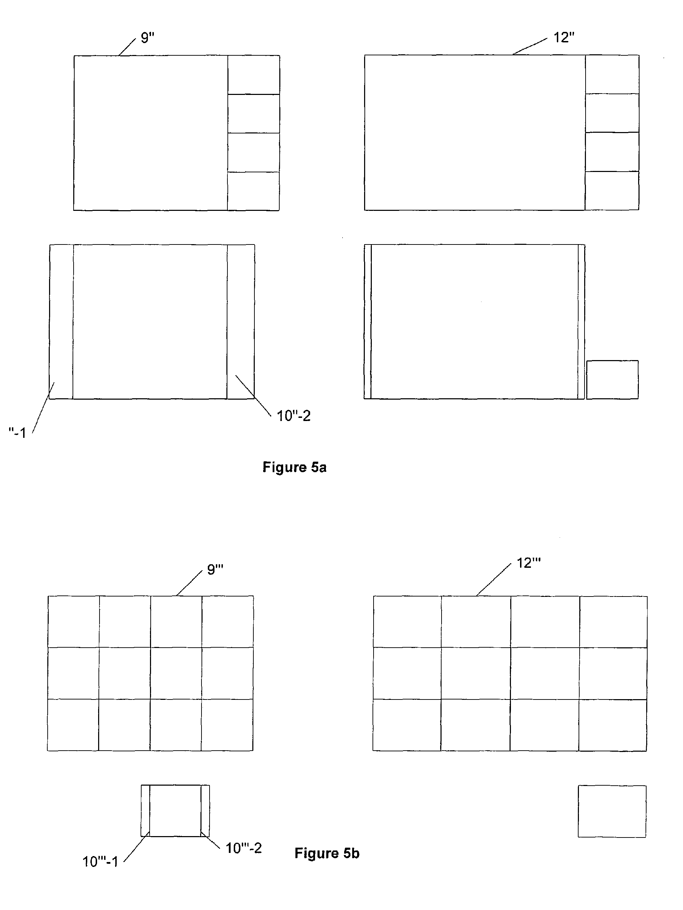

Figure 5b shows a 4 x 3 layout. On a standard display 9"', the images in all the windows are clipped 10"'-1 and 10"'-2. On a widescreen display 12"', no clipping is necessary.

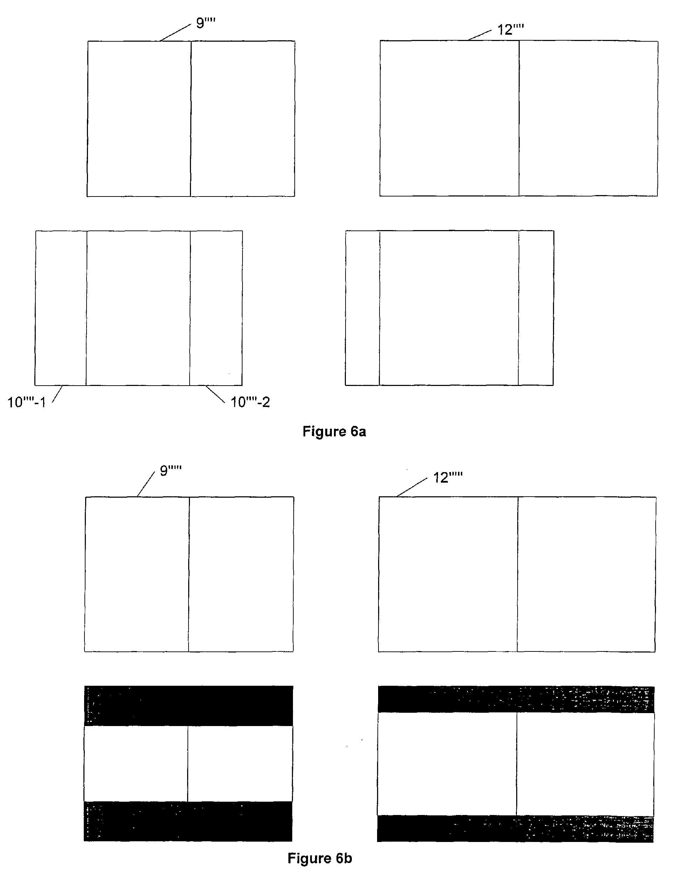

Figures 6a and 6b show a 2 x 1 layout. This is a commonly used layout being ideal for conferences involving 3 parties. Figure 6a shows severe clipping 10""-1 and 10""-2 on a standard display 9"", with naturally much less on a widescreen display 12"". Figure 6b shows another possible method for the composition, in which the images are not clipped, but are scaled down and black bars added top and bottom. It can be seen that on the widescreen display 12""', each window can be much larger. In fact, the image area is increased by a factor of 1.78 compared with the standard display. This is despite the display area being only 1.33 times greater on a widescreen display compared to a standard display, and illustrates the considerable benefit of the use of a widescreen display for composed videoconference images.

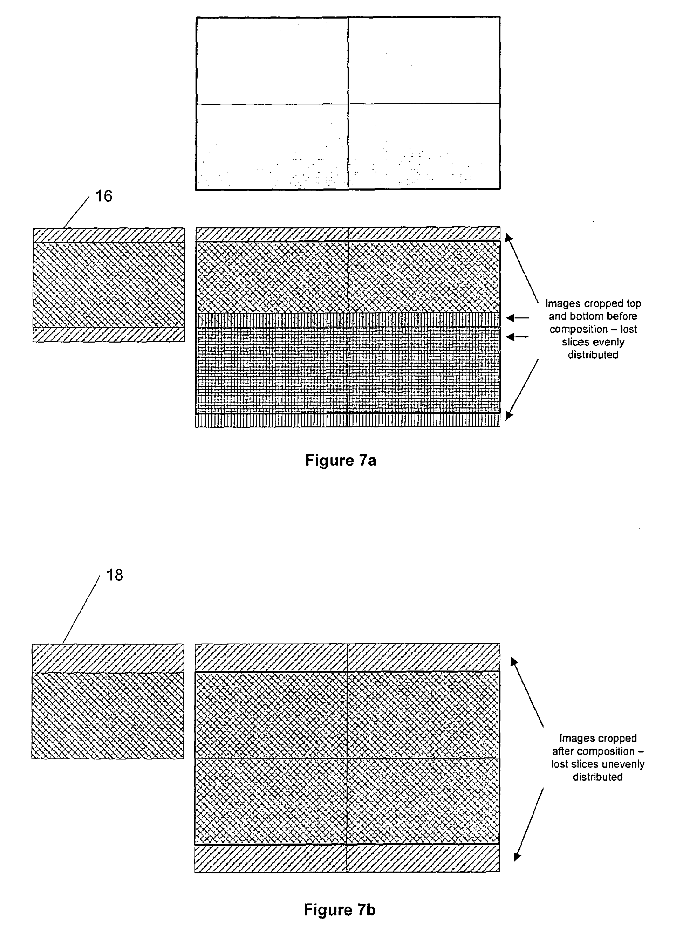

An additional consideration concerns images which need to be clipped or have black bars added in order to fit the display. Ideally this is done to an equal extent for each individual image window. This is illustrated in Figure 7a. This is achieved by scaling the images and then clipping, before composing the image windows 16 into the final output video data stream. The alternative, which is simpler but leads to undesirable results, is shown in Figure 7b. Here the overall image is scaled and composed first, then clipped to fit the screen. It can be seen that as a result the image windows 18 are not clipped equally top and bottom.

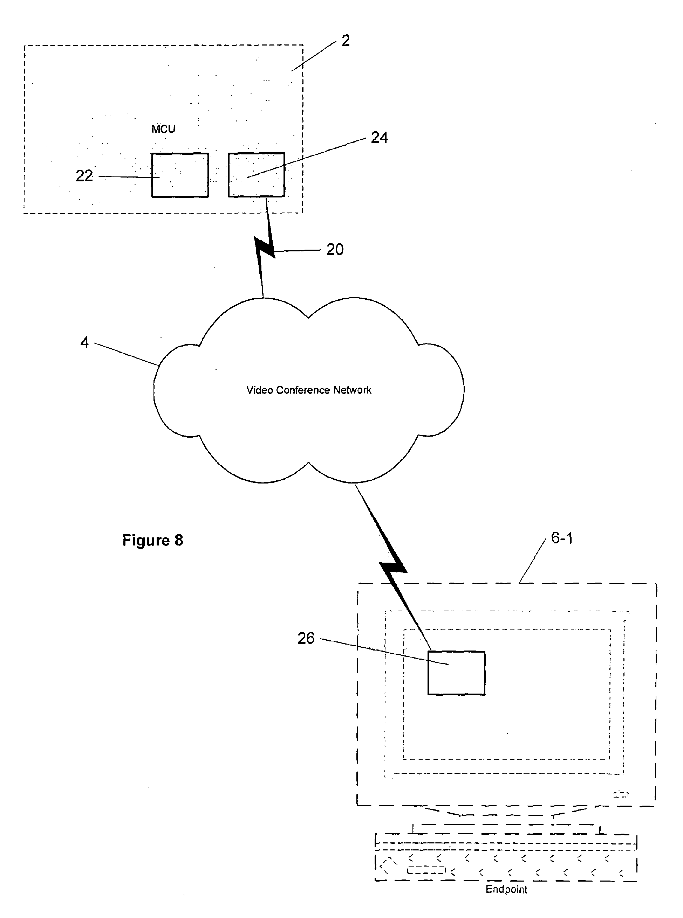

Figure 8 shows an MCU 2 with a connection 20 into a video conference network 4. incoming video streams and at least one (outgoing) composite video stream are transmitted over the link 20 for processing by an endpoint 6-1.

The MCU 2 includes a composition processor 22 and a scaling processor 24. The composition processor arranges incoming video streams into a composite video stream as described above. The scaling processor 24 then scales the horizontal dimension (preferably - although scaling in the vertical dimension may also or alternatively be applied) before onward transmission to the endpoint 6-1. A scaling processor 26 in the endpoint 6-1 then applies reverse scaling to bring the video stream back into the correct aspect ratio prior to display.

The scaling processors 24 and 26 are preferably implemented on a digital signal processor which is adapted to execute the step of scaling or reverse scaling an image in a horizontal or vertical dimension. The use of processor to scale images means that a dedicated electronic circuit does not need to be built to scale the images.

A modified endpoint may be produced which may be configured to drive either a standard or wide screen. Such endpoints may advertise to other endpoints that they are capable of receiving wide format video.

Some endpoints include a limited-capability MCU function - they can act as an MCU for a conference in which they are a participant along with a small number of additional participants. Such an endpoint may also include an MCU as described above.

## Claims

1. A multi-conference unit for connection in a video conference network, comprising a video input for receiving a video stream to be conferenced and a video output for outputting a video stream to a video endpoint, the unit further comprising a scaling processor operable to adjust the horizontal dimension of an output video stream before onward transmission to an endpoint, thereby to alter the aspect ratio of images in the output video stream.

2. A unit according to claim 1, wherein the scaling processor is arranged to produce an output video stream which contains images which are compressed in the horizontal direction in the ratio approximately 1.33 thereby compressing a 16:9 aspect ratio image to a 4:3 aspect ratio image.

3. A unit according to claim 1 or claim 2 arranged to receive a plurality of input video streams and arranged to produce a composite output stream including a plurality of the input streams arranged as tiles in the composite stream.

4. A unit according to claim 3, wherein the tiles are of different sizes and include at least one primary tile of larger size which is located generally centrally in the composite output stream, the other tiles in the composite stream being arranged along at least one edge of the primary image.

5. A unit according to claim 3 or claim 4, wherein the horizontal or vertical dimension of at least one of the tiles is increased or decreased, such as by adding a colour bar or clipping the tile respectively.

6. A unit according to any preceding claim arranged to receive a command from an endpoint to enable and/or disable the said adjustment of the horizontal dimension.

7. A unit according to any preceding claim including an integral endpoint.

8. A method of transmitting a video stream in a video conference network comprising receiving a video stream, scaling the stream in the horizontal dimension using a scaling processor and transmitting the scaled stream to an endpoint.

9. A method according to claim 8, wherein the scaling achieves a reduction in the horizontal dimension of approximately 0.75 whereby a 16:9 aspect ratio stream is compressed to a 4:3 aspect ratio stream.

10. A method according to claim 8 or 9, comprising receiving a plurality of input video streams and producing a composite output stream including a plurality of the input streams arranged as tiles in the composite stream.

11. A method according to claim 10, wherein the tiles are of different sizes and include at least one primary tile of larger size which is located generally centrally in the composite output stream, the other tiles in the composite stream being arranged along at least one edge of the primary image.

12. A method according to claim 10 or claim 11, wherein the horizontal or vertical dimension of at least one of the tiles is increased or decreased, such as by adding a colour bar or clipping the tile respectively.

13. A method according to any of claims 8 to 12, including receiving a command from an endpoint and enabling or disabling the said scaling responsive to the command.
